(19) Europäisches Patentamt
European Patent Office
Office européen des brevets

(11) **EP 4 583 393 A1**

(12) **EUROPEAN PATENT APPLICATION**
published in accordance with Art. 153(4) EPC

(43) Date of publication:
09.07.2025 Bulletin 2025/28

(51) International Patent Classification (IPC):
*H02M 7/48* (2007.01)    *G05F 1/00* (2006.01)
*G05F 1/66* (2006.01)    *H02J 3/32* (2006.01)

(21) Application number: 23952300.4

(22) Date of filing: 15.09.2023

(52) Cooperative Patent Classification (CPC):
G05F 1/00; G05F 1/66; H02J 3/32; H02M 7/48

(86) International application number:
PCT/JP2023/033746

(87) International publication number:
WO 2025/057411 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: TMEIC Corporation
Tokyo 104-0031 (JP)

(72) Inventor: BANI SHAMSEH, Mohammad
Tokyo 104-0031 (JP)

(74) Representative: Winter, Brandl - Partnerschaft
mbB
Alois-Steinecker-Straße 22
85354 Freising (DE)

(54) **POWER CONDITIONER AND FREQUENCY CONTROL METHOD**

(57)    A power conditioner includes an inverter that converts DC power output from a battery into AC power and supplies the AC power to a power grid and a controller that controls the inverter. The controller calculates a frequency change amount of the AC power based on differential power that is a difference between the AC power and target power. The controller calculates a correction amount for correcting the frequency change amount to be smaller than a threshold. Further, the controller sets, as a target frequency, a frequency obtained by adding a rated frequency of the inverter to a difference between the frequency change amount and the correction amount. Furthermore, the controller instructs the inverter to bring a frequency of the AC power close to the target frequency.

1:POWER CONVERSION SYSTEM

**FIG. 1**

## Description

Technical Field

The present disclosure relates to a technique for controlling the frequency of a power conditioner.

Background Art

Patent Literature 1 discloses a power grid stabilization system that stabilizes a power grid. Specifically, the power grid stabilization system calculates frequency change rates of generators at the time of an assumed accident. The power grid stabilization system calculates a range up to a stabilization limit of a frequency change rate based on the generator having the largest frequency change rate. Further, the power grid stabilization system calculates an amount of change of effective power of a power converter based on the range up to the stabilization limit of the frequency change rate and registers the amount of change in a database. This makes it possible to achieve stabilization at the time of an actual accident by, when the assumed accident actually occurs, executing stabilization measures decided beforehand.

Citation List

Patent Literature

[PTL 1] JP 2023060571 A

Summary of the Invention

Problems to be Solved by the Invention

A case in which the frequency of AC power output from a power conditioner (specifically, an inverter) has decreased because of occurrence of a system accident of a power grid is considered. In this case, the AC power is assumed to rise according to the decrease in the frequency of the AC power and exceed rated power of the inverter. Further, because of characteristics of the inverter, a ratio of an output voltage of the inverter and the frequency is controlled to be constant. For example, when the frequency of the AC power decreases, the output voltage of the inverter also decreases according to the characteristics of the inverter. On the other hand, since the AC power rises, an output current of the inverter falls into an overcurrent state.

According to Patent Literature 1, when the frequency of the AC power output from the inverter has fluctuated, control for stabilizing the AC power is performed. However, since the frequency keeps the decreased state, it is likely that the output voltage of the inverter is also in a low state and the output current of the inverter falls into the overcurrent state.

One object of the present disclosure is to provide a technique that, when the frequency of AC power output from an inverter has fluctuated, can prevent an output current of the inverter from falling into an overcurrent state.

Means for Solving the Problems

A first aspect of the present disclosure relates to a power conditioner. The power conditioner includes: an inverter that converts DC power output from a battery into AC power and supplies the AC power to a power grid; and a controller that controls the inverter. The controller calculates a frequency change amount of the AC power based on differential power that is a difference between the AC power and target power. The controller calculates a correction amount for correcting the frequency change amount to be smaller than a threshold. Further, the controller sets, as a target frequency, a frequency obtained by adding a rated frequency of the inverter to a difference between the frequency change amount and the correction amount. Furthermore, the controller instructs the inverter to bring a frequency of the AC power close to the target frequency.

A second aspect of the present disclosure relate to a frequency control method. The frequency control method includes: converting DC power output from a battery into AC power using an inverter and supplying the AC power to a power grid; calculating a frequency change amount of the AC power based on differential power that is a difference between the AC power and target power; calculating a correction amount for correcting the frequency change amount to be smaller than a threshold; setting, as a target frequency, a frequency obtained by adding a rated frequency of the inverter to a difference between the frequency change amount and the correction amount; and instructing the inverter to bring a frequency of the AC power close to the target frequency.

Advantageous Effects of the Invention

According to the present disclosure, the frequency change amount of the AC power is calculated based on the differential power that is the difference between the AC power and the target power. Then, the correction amount for correcting the frequency change amount to be smaller than the threshold is calculated. Further, the frequency obtained by adding the rated frequency of the inverter to the difference between the frequency change amount and the correction amount is set as the target frequency. The inverter is instructed to bring the frequency of the AC power to close to the target frequency. Accordingly, when the frequency of the AC power output from the inverter has fluctuated, the frequency of the AC power is corrected and the AC power is also corrected to reduce the differential power. Therefore, it is possible to prevent an output current output from the inverter from falling into an overcurrent state and stabilize the power grid.

Brief Description of the Drawings

[Fig. 1]

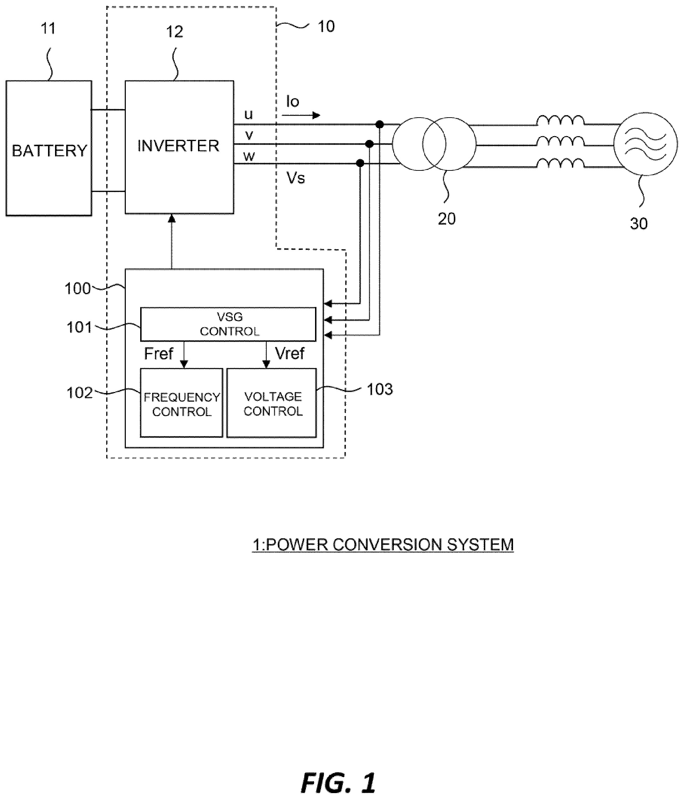

Fig. 1 is a diagram for explaining an overview of a power conversion system.
[Fig. 2]

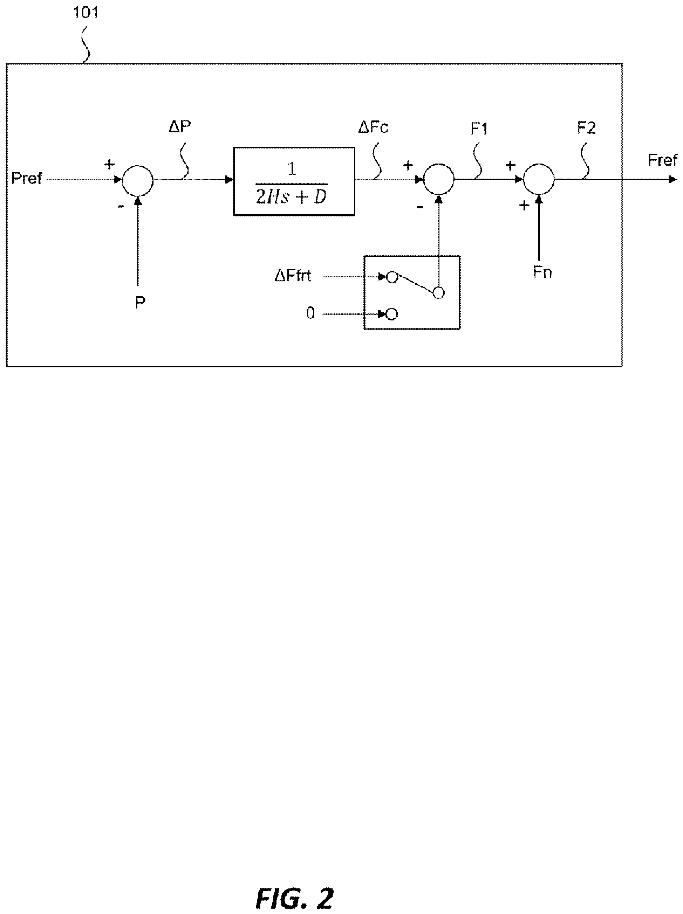

Fig. 2 is an explanatory diagram illustrating a specific example of a controller according to an embodiment.
[Fig. 3]

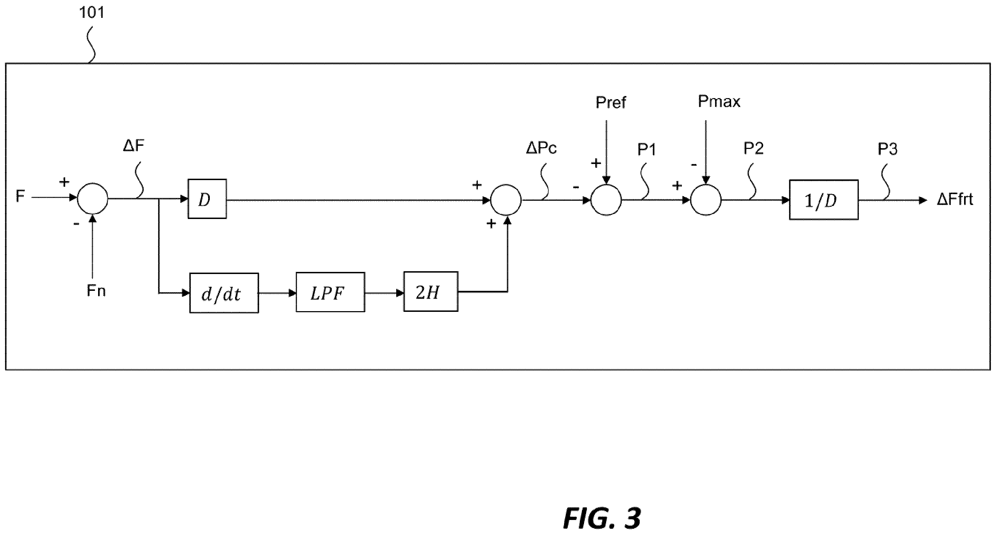

Fig. 3 is an explanatory diagram illustrating a specific example of the controller according to the embodiment.
[Fig. 4]

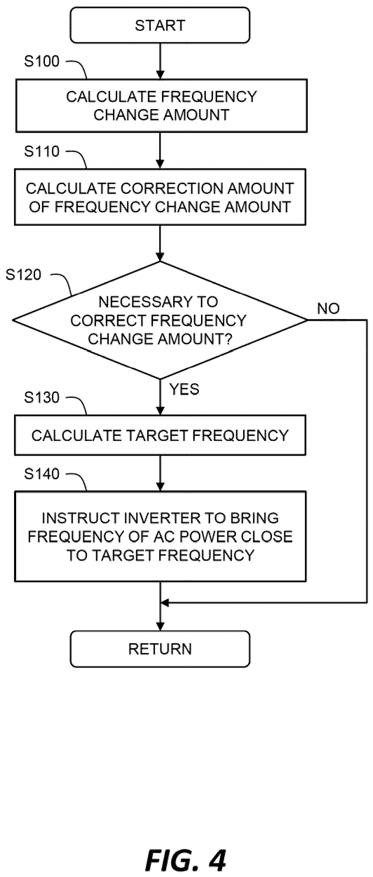

Fig. 4 is a flowchart illustrating a processing example of the controller according to the embodiment.
[Fig. 5]

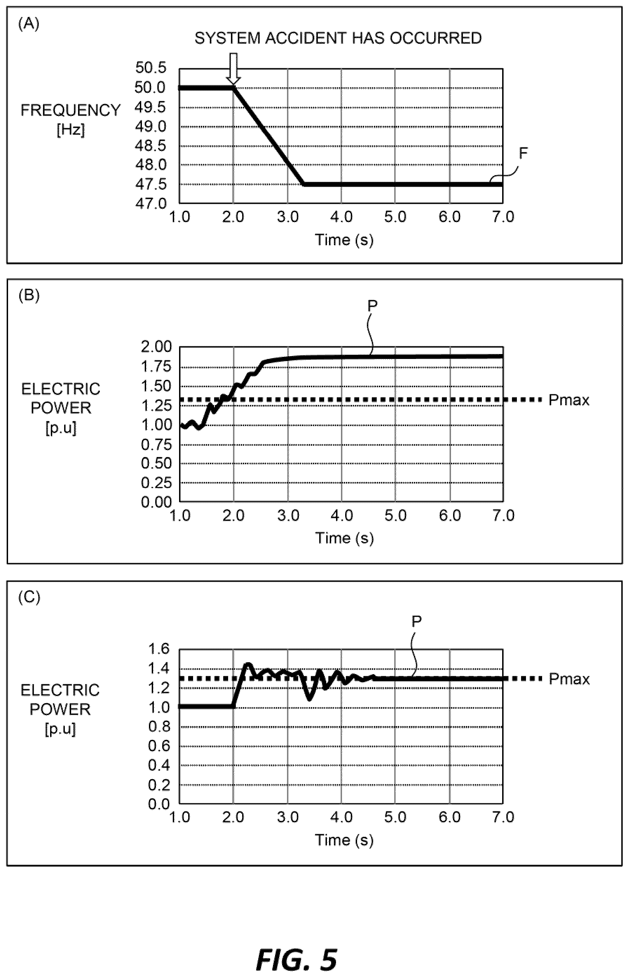

Fig. 5 is an explanatory diagram illustrating an output result example of an inverter according to the embodiment.

Description of Embodiment

A power conditioner and a frequency control method according to an embodiment of the present disclosure are described with reference to the accompanying drawings. The same reference numerals and signs are added to elements common to the figures and redundant description of the elements is omitted.

1. OVERVIEW OF A POWER CONVERSION SYSTEM

Fig. 1 is a diagram for explaining an overview of a power conversion system 1. The power conversion system 1 includes a battery 11, a power conditioner 10, a transformer 20, and a power grid 30. The power conditioner 10 includes an inverter 12 and a controller 100.
The battery 11 is a power storage device that stores electricity generated by renewable energy. Examples of the renewable energy include solar power, wind power, and water power.
The inverter 12 is a device that converts DC power output from the battery 11 into AC power and supplies the AC power to the power grid 30 via the transformer 20. Examples of the inverter 12 include a GFM inverter of a voltage control type.
The controller 100 is connected to the inverter 12 and controls the inverter 12. An output voltage Vs and an output current Io output from the inverter 12 are input to the controller 100. The controller 100 calculates, based on the output voltage Vs and the output current Io, AC power to be output from the inverter 12.
Note that the output voltage Vs and the output current Io input to the controller 100 are a detection value of the output voltage Vs (hereinafter referred to as Vs detection value) and a detection value of the output current Io (hereinafter referred to as Io detection value).

The Vs detection value and the Io detection value are detected by a detector (not shown) provided between the power conditioner 10 and the power grid 30. In an example illustrated in Fig. 1, the Vs detection value and the Io detection value are detected between the power conditioner 10 and the transformer 20. However, the Vs detection value and the Io detection value may not be limited to this. The Vs detection value and the Io detection value may be detected, for example, between the transformer 20 and the power grid 30.
The output voltage Vs output from the inverter 12 consists of three phase voltages (Vsu, Vsv, and Vsw). The output current Io output from the inverter 12 consists of three phase currents (Iou, Iov, and Iow). That is, the Vs detection value described above includes a Vsu detection value, a Vsv detection value, and a Vsw detection value. The Io detection value described above includes an Iou detection value, an Iov detection value, and an Iow detection value.
The controller 100 executes VSG (Virtual Synchronous Generator) control 101 based on the Vs detection value and the Io detection value input to the controller 100. VSG means a virtual synchronous generator that simulatively imparts dynamic characteristics of a synchronous generator to the inverter 12. That is, the VSG control 101 means controlling the virtual synchronous generator. Parameters indicating the dynamic characteristics of the synchronous generator are used for the VSG control 101. Examples of the parameters include an inertia constant M and a braking constant D.
The controller 100 performs, based on a target frequency Fref obtained by the VSG control 101, frequency control 102 for controlling the frequency of AC power (consisting of the output voltage Vs and the output current Io) output from the inverter 12. Specifically, in the frequency control 102, the controller 100 instructs the inverter 12 to bring the frequency of the AC power close to the target frequency Fref. Details about a calculation example of the target frequency Fref are described below.
Accordingly, even when the frequency has fluctuated because of a system accident, the inverter 12 can output AC power of a stable frequency. Therefore, it is possible to continue operation of the inverter 12 and prevent the power grid 30 from becoming unstable. Note that function requirements for continuing the operation of the inverter are decided not to parallel off the power grid 30 all at once. The function requirements are referred to as FRT (Fault Ride Through) requirements. Examples of the FRT requirements are that the frequency of AC power is within a specified range and that a change rate of the frequency of the AC power is equal to or smaller than a reference value. According to this embodiment, the frequency of the AC power is controlled under the FRT requirements. For example, when the frequency of the AC power is decreasing and a power value of the AC power is rising, the frequency of the AC power is controlled.

Further, the controller 100 may perform, based on a target voltage Vref obtained by the VSG control, voltage control 103 for controlling the output voltage Vs output from the inverter 12. For example, when voltage drop of an AC voltage of the power grid 30 is equal to or larger than a predetermined value because of fluctuation in the AC voltage, the controller 100 instructs the inverter 12 to bring the output voltage Vs close to the target voltage Vref. Accordingly, even when LVRT (Low Voltage Ride Through) has occurred together with the fluctuation in the frequency, the inverter 12 can output a stable voltage. Therefore, it is possible to prevent the power grid 30 from becoming unstable.

## 2. EXAMPLE OF THE CONTROLLER

## 2-1. CONFIGURATION EXAMPLE

The controller 100 includes hardware for implementing various functions. The hardware may be a processing circuit or may be a computer that executes, with a CPU, a program stored in a storage device. Examples of the processing circuit include an FPGA (Field Programmable Gate Array) and an ASIC (Application Specific Integrated Circuit).

## 2-2. CALCULATION EXAMPLE OF THE TARGET FREQUENCY

Fig. 2 is an explanatory diagram illustrating a specific example of a function of the controller 100 according to the embodiment. Fig. 2 illustrates a calculation example of the target frequency Fref in the VSG control 101. Specifically, in the VSG control 101, the controller 100 calculates, as differential power ΔP, the difference between the AC power P output from the inverter 12 and the target power Pref. However, the target frequency Fref calculated in the example illustrated in Fig. 2 is a value made dimensionless based on a rated frequency. Values made dimensionless are used for the target power Pref and the AC power P. For example, rated power is used for making these kinds of power dimensionless. That is, values at the time when the rated power is set to 1 are used as the values of the target power Pref and the AC power P in the calculation illustrated in Fig. 2.

Then, the controller 100 calculates a frequency change amount ΔFc of the AC power P based on the differential power ΔP. Specifically, the controller 100 sets, as a frequency change amount ΔFc, a frequency obtained by multiplying the differential power ΔP by parameters indicating dynamic characteristics of a synchronous generator. For example, when the dynamic characteristics are an inertia constant H, a braking constant D, and a unit time s, the frequency change amount ΔFc of the AC power P is represented by the following Expression (1).
[Math. 1]

$$\Delta Fc = \frac{1}{2Hs + D} \times \Delta P \cdots (1)$$

Further, the controller 100 calculates a correction amount ΔFfrt for correcting the frequency change amount ΔFc to be smaller than a threshold. Details of a calculation example of the correction amount ΔFfrt are described below.

Further, the controller 100 determines, based on predetermined conditions, whether it is necessary to correct the frequency change amount ΔFc. The predetermined conditions are that the frequency change amount ΔFc is larger than a predetermined value and the AC power P is larger than allowable overpower of the inverter 12, that is, maximum power allowed to be output exceeding rated power in a short period. The allowable overpower is set to, for example, 130% of the rated power. When the predetermined conditions are satisfied, the controller 100 determines that it is necessary to correct the frequency change amount ΔFc. In this case, the controller 100 subtracts the correction amount ΔFfrt from the frequency change amount ΔFc. On the other hand, when the predetermined conditions are not satisfied, the controller 100 determines that it is unnecessary to correct the frequency change amount ΔFc. In this case, the controller 100 does not subtract the correction amount ΔFfrt from the frequency change amount ΔFc. In the example illustrated in Fig. 2, when it is determined that it is unnecessary to correct the frequency change amount ΔFc, a value of a correction amount subtracted from the frequency change amount ΔFc is set to zero.

The controller 100 sets, as the target frequency Fref, a second frequency F2 obtained by adding a rated frequency Fn of the inverter 12 to a first frequency F1 obtained by subtracting the correction amount ΔFfrt from the frequency change amount ΔFc. The rated frequency Fn is a reference value in calculating the target frequency Fref made dimensionless as described above and is set to 1. A rated frequency before the target frequency Fref is made dimensionless is, for example, 50 Hz or 60 Hz.

## 2-3. CALCULATION EXAMPLE OF THE CORRECTION AMOUNT OF THE FREQUENCY CHANGE AMOUNT

Fig. 3 is an explanatory diagram illustrating a specific example of the controller 100 according to the embodiment. Fig. 3 illustrates a calculation example of the correction amount ΔFfrt for correcting the frequency change amount ΔFc. Specifically, in the VSG control 101, the controller 100 calculates the difference between a frequency F of the AC power P and the rated frequency Fn as a differential frequency ΔF. As the frequency F, a value made dimensionless based on a measurement value of the frequency of the AC power P is used. The measurement value of the frequency of the AC power P is acquired, for example, via a PLL (Phase Locked Loop) provided in the controller 100. For example, in the case of a state in which the PLL is locked, the measurement value of the frequency of the AC power P and a reference frequency (an example: 50 Hz or 60 Hz) are not different. It can be confirmed that the frequency of the AC power P is in a state in which the frequency is not fluctuating. On the other hand, in the case of a state in which the PLL is unlocked, the measurement value of the frequency of the AC power P and the reference frequency are different. It can be confirmed that the frequency of the AC power P is fluctuating.

The controller 100 calculates a power change amount $\Delta Pc$ of the AC power P based on the differential frequency $\Delta F$. Specifically, the controller 100 sets, as the power change amount $\Delta Pc$, electric power obtained by multiplying the differential frequency $\Delta F$ by the parameters indicating the dynamic characteristics of the synchronous generator. For example, when the dynamic characteristics are the inertia constant H, the braking constant D, and the unit time s, the power change amount $\Delta Pc$ of the AC power P is represented by the following Expression (2).

[Math. 2]

$$\Delta Pc = (2Hs + D) \times \Delta F \cdots (2)$$

The above Expression (2) is represented as the following Expression (3) or Expression (4) as well. Note that RoCoF (Rate of Change of Frequency) means a frequency change rate. A unit of RoCoF is represented by Hz/s.

[Math. 3]

$$\Delta Pc = 2H \times \frac{d\Delta F}{dt} + D \times \Delta F \cdots (3)$$

[Math. 4]

$$\Delta Pc = 2H \times RoCoF + D \times \Delta F \cdots (4)$$

Further, first, the controller 100 subtracts the power change amount $\Delta Pc$ from the target power Pref to obtain first power P1 and, then, subtracts allowable overpower Pmax of the inverter 12 from the first power P1 to obtain second power P2. For example, when the allowable overpower Pmax is set to 130% of the rated power, a value of the allowable overpower Pmax is 1.3. The controller 100 sets, as the correction amount $\Delta Ffrt$, third power P3 obtained by multiplying the second power P2 by a predetermined coefficient. The predetermined coefficient is represented by, for example, a formula (1/D) obtained by dividing 1 by the braking constant D.

## 2-4. PROCESSING EXAMPLE

Fig. 4 is a flowchart summarily illustrating a processing example of the controller 100 according to the embodiment.

In step 100, the controller 100 calculates the frequency change amount $\Delta Fc$ of the AC power P based on the differential power $\Delta P$ that is the difference between the AC power P and the target power Pref. Thereafter, the processing proceeds to step S110.

In step S110, the controller 100 calculates the correction amount $\Delta Ffrt$ for correcting the frequency change amount $\Delta Fc$ to be smaller than the threshold. Thereafter, the processing proceeds to step S120.

In step S120, the controller 100 determines, based on the predetermined conditions, whether it is necessary to correct the frequency change amount $\Delta Fc$. When it is determined that it is necessary to correct the frequency change amount $\Delta Fc$ (step S120; Yes), the processing proceeds to step S130. Otherwise (step S120; No), the processing ends. The predetermined conditions are as described above.

In step S130, the controller 100 calculates the target frequency Fref. Specifically, the controller 100 sets, as the target frequency Fref, a frequency obtained by adding the rated frequency Fn of the inverter 12 to the difference between the frequency change amount $\Delta Fc$ and the correction amount $\Delta Ffrt$. Thereafter, the processing proceeds to step S140.

In step S140, the controller 100 instructs the inverter 12 to bring the frequency of the AC power P close to the target frequency Fref.

## 4. OUTPUT RESULT EXAMPLE OF THE INVERTER

Fig. 5 is an explanatory diagram illustrating an output result example of the inverter 12 according to the embodiment. Fig. 5(A) illustrates an example of a waveform of the frequency F at the time when the frequency F of the AC power P has fluctuated. Fig. 5(B) illustrates an example of a waveform of the AC power P before the frequency F of the AC power P is corrected. Fig. 5(C) illustrates an example of a waveform of the AC power P after the frequency F of the AC power P has been corrected. Note that the vertical axis of graphs illustrated in Fig. 5(B) and Fig. 5(C) is represented by PU (Per Unit) but may be represented by percentage. In the examples illustrated in Fig. 5(B) and Fig. 5(C), the allowable overpower Pmax is represented as "1.3 PU".

Fig. 5(A) illustrates an example in which a system accident has occurred at time 2.0 s. Thereafter, the frequency F decreases from 50 Hz to 47.5 Hz. In this case, the AC power P before the frequency F of the AC power P is corrected exceeds the allowable overpower Pmax as illustrated in Fig. 5(B). On the other hand, the AC power P after the frequency F of the AC power P has been corrected can be prevented from exceeding the allowable overpower Pmax as illustrated in Fig. 5(C).

As described above, when fluctuation in the frequency F of the AC power P (an example: a decrease in the frequency) has occurred at the time of system accident occurrence, the frequency F of the AC power P is corrected, whereby the AC power P is controlled not to exceed the allowable overpower Pmax. This makes it possible to prevent the output current Io output from the inverter 12 from becoming an overcurrent.

5. EFFECTS

With the power conditioner 10 according to this embodiment, the frequency change amount ΔFc of the AC power P is calculated based on the differential power ΔP that is the difference between the AC power P and the target power Pref. Then, the correction amount ΔFfrt for correcting the frequency change amount ΔFc to be smaller than the threshold is calculated. Further, the frequency obtained by adding the rated frequency Fn of the inverter 12 to the difference between the frequency change amount ΔFc and the correction amount ΔFfrt is set as the target frequency Fref. The inverter 12 is instructed to bring the frequency F of the AC power P close to the target frequency Fref. Accordingly, when the frequency F of the AC power P has fluctuated, the frequency F of the AC power P is corrected and the AC power P is also corrected such that the differential power ΔP decreases. Therefore, it is possible to prevent the output current Io output from the inverter 12 from becoming an overcurrent and stabilize the power grid 30.

Reference Signs List

1...Power conversion system, 10...Power conditioner, 11...Battery, 12...Inverter, 20...Transformer, 30...Power grid, 100...Controller, 101... VSG control, 102...Frequency control, 103...Voltage control

**Claims**

1.  A power conditioner comprising:

    an inverter that converts DC power output from a battery into AC power and supplies the AC power to a power grid; and
    a controller that controls the inverter, wherein the controller is configured to:

      calculate a frequency change amount of the AC power based on differential power that is a difference between the AC power and target power;
      calculate a correction amount for correcting the frequency change amount to be smaller than a threshold;
      set, as a target frequency, a frequency obtained by adding a rated frequency of the inverter to a difference between the frequency change amount and the correction amount; and
      instruct the inverter to bring a frequency of the AC power close to the target frequency.

2.  The power conditioner according to claim 1, wherein the controller is configured to correct the frequency change amount when the frequency change amount is larger than a predetermined value and the AC power is larger than allowable overpower of the inverter.

3.  The power conditioner according to claim 1, wherein the controller is configured to set, as the frequency change amount, a frequency obtained by multiplying the differential power by parameters indicating dynamic characteristics of a synchronous generator.

4.  The power conditioner according to claim 1, wherein the controller is configured to:

      calculate a power change amount of the AC power based on a differential frequency that is a difference between a measurement value of a frequency of the AC power and the rated frequency; and
      set, as the correction amount, third power obtained by multiplying, by a predetermined coefficient, second power obtained by subtracting allowable overpower of the inverter from first power obtained by subtracting the power change amount from the target power.

5.  The power conditioner according to claim 4, wherein the controller is configured to set, as the power change amount, electric power obtained by multiplying the differential frequency by parameters indicating dynamic characteristics of a synchronous generator.

6.  The power conditioner according to claim 1, wherein the controller is configured to, when a volage drop of the output voltage is equal to or larger than a predetermined value because of fluctuation in an output voltage of the inverter, perform voltage control to bring the output voltage close to a target voltage.

7.  A frequency control method comprising:

      converting DC power output from a battery into AC power using an inverter and supplying the AC power to a power grid;
      calculating a frequency change amount of the AC power based on differential power that is a difference between the AC power and target power;
      calculating a correction amount for correcting the frequency change amount to be smaller than a threshold;
      setting, as a target frequency, a frequency obtained by adding a rated frequency of the inverter to a difference between the frequency change amount and the correction amount; and instructing the inverter to bring a frequency of the AC power close to the target frequency.

1:POWER CONVERSION SYSTEM

*FIG. 1*

**FIG. 2**

**FIG. 3**

EP 4 583 393 A1

```
                    ┌─────────────────┐
                    │      START      │
                    └─────────────────┘
                             │
  S100 ──┐                   ▼
      ┌──────────────────────────────────────┐
      │        CALCULATE FREQUENCY            │
      │         CHANGE AMOUNT                 │
      └──────────────────────────────────────┘
                             │
  S110 ──┐                   ▼
      ┌──────────────────────────────────────┐
      │      CALCULATE CORRECTION AMOUNT      │
      │      OF FREQUENCY CHANGE AMOUNT       │
      └──────────────────────────────────────┘
                             │
                             ▼
  S120 ──┐             ◇─────────────◇
                 NECESSARY TO              NO
              CORRECT FREQUENCY      ────────────┐
                CHANGE AMOUNT?                    │
                     ◇─────────────◇             │
                             │ YES               │
  S130 ──┐                   ▼                   │
      ┌──────────────────────────────────────┐   │
      │      CALCULATE TARGET FREQUENCY       │   │
      └──────────────────────────────────────┘   │
                             │                   │
  S140 ──┐                   ▼                   │
      ┌──────────────────────────────────────┐   │
      │   INSTRUCT INVERTER TO BRING          │   │
      │   FREQUENCY OF AC POWER CLOSE         │   │
      │      TO TARGET FREQUENCY              │   │
      └──────────────────────────────────────┘   │
                             │                   │
                             ▼◄──────────────────┘
                    ┌─────────────────┐
                    │     RETURN      │
                    └─────────────────┘
```

## FIG. 4

**FIG. 5**

## INTERNATIONAL SEARCH REPORT

| International application No. |
| --- |
| **PCT/JP2023/033746** |

**A. CLASSIFICATION OF SUBJECT MATTER**

*H02M 7/48*(2007.01)i; *G05F 1/00*(2006.01)i; *G05F 1/66*(2006.01)i; *H02J 3/32*(2006.01)i
FI: H02M7/48 R; G05F1/00 A; G05F1/66 Z; H02J3/32; H02M7/48 M

According to International Patent Classification (IPC) or to both national classification and IPC

**B. FIELDS SEARCHED**

Minimum documentation searched (classification system followed by classification symbols)

H02M7/48; G05F1/00; G05F1/66; H02J3/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/098083 A1 (KAWASAKI JUKOGYO KABUSHIKI KAISHA) 02 July 2015 (2015-07-02)<br>entire text, all drawings | 1-7 |
| A | JP 2017-131065 A (YANMAR CO., LTD.) 27 July 2017 (2017-07-27)<br>entire text, all drawings | 1-7 |
| A | JP 2018-23239 A (TOSHIBA MITSUBISHI-ELECTRIC INDUSTRIAL SYSTEMS CORPORATION) 08 February 2018 (2018-02-08)<br>entire text, all drawings | 1-7 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 October 2023** | **14 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/033746**

| Patent document cited in search report | | | Publication date (day/month/year) | Patent family member(s) | Publication date (day/month/year) |
|---|---|---|---|---|---|
| WO | 2015/098083 | A1 | 02 July 2015 | (Family: none) | |
| JP | 2017-131065 | A | 27 July 2017 | (Family: none) | |
| JP | 2018-23239 | A | 08 February 2018 | (Family: none) | |

Form PCT/ISA/210 (patent family annex) (January 2015)

**EP 4 583 393 A1**

**Patent documents cited in the description**

- JP 2023060571 A